# EUROPÄISCHE PATENTSCHRIFT

(11) **EP 1 423 187 B1**
(45) Veröffentlichungstag und Bekanntmachung des Hinweises auf die Patenterteilung: **02.03.2005**
(21) Anmeldenummer: 02767452.2
(22) Anmeldetag: 29.08.2002
(51) Int. Cl.: B01J 8/20, B01J 8/00, B01J 8/06, B01J 19/00, C07F 9/40

(54) **FEST/FLÜSSIG-REAKTION**
SOLID-LIQUID REACTION
REACTION SOLIDE-LIQUIDE

(30) Priorität: 29.08.2001 DE 10142284
(43) Veröffentlichungstag der Anmeldung: 02.06.2004
(73) Patentinhaber: BASF AKTIENGESELLSCHAFT, 67056 Ludwigshafen (DE)
(72) Erfinder: KLOPP, Ingo, 67256 Weisenheim (DE); BOGENSTÄTTER, Thomas, 67098 Bad Dürkheim (DE); FRANKE, Dirk, 67067 Ludwigshafen (DE); MUNZINGER, Manfred, 67246 Dirmstein (DE)
(74) Vertreter: Reitstötter - Kinzebach & Partner (GbR)
(86) Internationale Anmeldenummer: PCT/EP2002/009659
(87) Internationale Veröffentlichungsnummer: WO 2003/020411

(56) Entgegenhaltungen:
- EP-A- 0 471 550
- US-A- 3 075 830

## Beschreibung

Die vorliegende Erfindung betrifft ein Verfahren zur Durchführung einer Fest/Flüssig-Reaktion, d.h. einer Umsetzung in flüssiger Phase, bei der ein erster Reaktand in teilchenförmiger fester Form und ein zweiter Reaktand in gelöster Form vorliegt und eines der Reaktionsprodukte im Reaktionsmedium unlöslich ist. Durch geeignete Wahl des Reaktionsmediums können zahlreiche Umsetzungen in dieser Weise durchgeführt werden, z.B. die Herstellung von Ethern oder Estern durch die Williamsonsche Synthese oder die Herstellung gemischter Säureanhydride durch Umsetzung eines Salzes einer ersten Säure mit dem Halogenid einer zweiten Säure. Das bei diesen Synthesen als Koppelprodukt gebildete anorganische Salz ist in vielen organischen Lösungsmitteln unlöslich.

Ein technisch bedeutsames Beispiel ist die Umsetzung von Natriumoder Ammoniumbenzoat mit Phosphor(III)chlorid zu Tribenzoylphosphit und Natrium- bzw. Ammoniumchlorid. Tribenzoylphosphit kann mit Triscyanomethylhexahydrotriazin umgesetzt und das Umsetzungsprodukt kann zu N-Phosphonomethylglycin hydrolysiert werden, welches unter dem Namen Glyphosate bekannt und ein in großen Umfang eingesetztes Totalherbizid ist. Für die angesprochene weitere Umsetzung des Tribenzoylphosphits ist die vorhergehende vollständige Abtrennung des gebildeten Natrium- oder Ammoniumchlorids erforderlich.

Bollmacher, H. und Satori, P. beschreiben in Chemiker-Zeitung 107 (1983) Nr. 4, S. 121-126 die Herstellung von Tribenzoylphosphit. Dabei wird Natriumbenzoat in wasserfreiem Ether suspendiert und mit Phosphor(III)chlorid versetzt. Anschließend wird das Lösungsmittel im Hochvakuum abdestilliert und durch Behandeln mit Hexan werden mitgebildete Nebenprodukte entfernt.

Bei Umsetzungen der beschriebenen Art, bei denen ein Reaktand ein Feststoff ist während der andere Reaktand gelöst in der flüssigen Phase vorliegt, findet die Reaktion an der Oberfläche oder in unmittelbarer Nähe zur Oberfläche des festen Reaktanden statt. Das unlösliche Reaktionsprodukt bildet sich an der Oberfläche des festen Reaktanden aus. Allerdings sind die Kontaktstellen zwischen dem vorgelegten festen Reaktanden und dem sich bildenden festen Reaktionsprodukt äußerst fragil. Außerdem nimmt das Volumen des festen Reaktanden im Verlauf der Reaktion stetig ab, so dass am Ende der Umsetzung lediglich ein loses Agglomerat des festen Reaktionsproduktes vorliegt. Vielfach bildet das an der Oberfläche des festen Reaktanden aufwachsende feste Reaktionsprodukt poröse Strukturen, die ebenfalls durch erhebliche Fragilität gekennzeichnet sind. Bereits kleine mechanische Belastungen reichen aus, um das feste Reaktionsprodukt von der Oberfläche des festen Reaktanden zu lösen bzw. das lose Agglomerat des festen Reaktionsprodukts zu zerstören. Intensives Rühren bei der Umsetzung führt zur Bildung sehr feiner und damit schlecht filtrierbarer Feststoffe. Diese Nachteile sind umso ausgeprägter, je größer die Ansatzgröße gewählt ist, da sich der Abrieb infolge der größeren Scherung am Rührer bei großen Ansätzen verstärkt. Ohne mechanische Durchmischung würden die Feststoffe sich jedoch am Boden des Reaktionsgefäßes absetzen oder an der Flüssigkeitsoberfläche aufschwimmen, was zu einer inakzeptablen Verlängerung der Reaktionszeiten aufgrund der langen Diffusionswege führt.

Der Erfindung liegt daher die Aufgabe zugrunde, ein Verfahren zur Durchführung einer Fest/Flüssig-Reaktion anzugeben, bei dem das unlösliche Reaktionsprodukt in einer gut filtrierbaren Form anfällt.

Erfindungsgemäß wird diese Aufgabe durch ein Verfahren gelöst, bei dem man
a) eine Reaktions-Suspension zubereitet, die einen unter Salzen organischer oder sauerstoffhaltiger anorganischer Säuren oder Alkoholaten ausgewählten ersten Reaktanden suspendiert und einen unter anorganischen oder organischen Säurehalogeniden und Alkylhalogeniden ausgewählten zweiten Reaktanden gelöst in einem Suspensionsmedium enthält, wobei eines der Reaktionsprodukte unlöslich im Suspensionsmedium ist,
b) die Reaktions-Suspension durch eine längliche Reaktionszone leitet, wobei die Reynolds-Zahl der Strömung weniger als 20000 beträgt, und
c) das gebildete unlösliche Reaktionsprodukt abtrennt.

Das Suspensionsmedium wird so ausgewählt, dass es gegenüber den eingesetzten Reaktanden und Reaktionsprodukten inert ist. Der erste Reaktand ist im Suspensionsmedium unlöslich, der zweite Reaktand ist darin löslich. Bei dem unlöslichen Reaktionsprodukt kann es sich um das Wertprodukt oder ein Koppelprodukt der Umsetzung handeln.

Für die Zwecke der vorliegenden Anmeldung bedeutet "unlöslich" eine Löslichkeit von weniger als 1 g/100 ml und "löslich" eine Löslichkeit oder Mischbarkeit von mehr als 5 g/100 ml bei der jeweiligen Reaktionstemperatur. Die Strömung der Reaktions-Suspension durch die Reaktionzone ist durch eine Reynolds-Zahl von weniger als 20000, vorzugsweise weniger als 10000, besonders bevorzugt weniger als 5000, gekennzeichnet, d.h. es handelt sich um eine im Wesentlichen laminare oder schwach turbulente Strömung. Die Reaktions-Suspension wird demzufolge unter scherarmen Bedingungen durch die Reaktionszone geführt. "Längliche Reaktionszone" bedeutet, dass das Verhältnis von Länge zu (längstem) Durchmesser der Reaktionszone mehr als 10, vorzugsweise mehr als 25 beträgt. Der Querschnitt der Reaktionszone ist nicht kritisch, im Allgemeinen ist ein kreisförmiger Querschnitt bevorzugt.

Das erfindungsgemäße Verfahren vermeidet zum Einen, dass exzessive mechanische Kräfte auf die fragilen Teilchen in der Reaktions-Suspension ausgeübt werden, die zu Abrieb und unerwünscht feinteiligem Feststoff führen. Andererseits verhindert das Ausbilden einer laminaren oder allenfalls schwach turbulenten Strömung das Auftreten von Inhomogenitäten in der Reaktions-Suspension, wie das Absetzen von Feststoffen.

Die Reaktions-Suspension wird durch die längliche Reaktionszone parallel zu deren Längsachse geführt. Im Allgemeinen ist es bevorzugt, dass die Längsachse der Reaktionszone vertikal verläuft, d.h. die Reaktions-Suspension wird entweder in Richtung der Schwerkraft oder entgegen der Richtung der Schwerkraft durch die Reaktionszone geführt. Eine Strömung entgegen der Richtung der Schwerkraft ist bevorzugt, wenn das gebildete unlösliche Reaktionsprodukt eine höhere Dichte als das Supensionsmedium aufweist, während eine Strömung in Richtung der Schwerkraft bevorzugt ist, wenn das gebildete unlösliche Reaktionsprodukt eine niedrigere Dichte als das Suspensionsmedium aufweist und/oder die Reaktion eine ausgeprägte exotherme Wärmetönung aufweist, die zu einer Verringerung der Dichte des Suspensionsmediums im Verlauf der Reaktion führt. Die Strömungsgeschwindigkeit sollte dabei vorzugsweise so gewählt sein, dass sie mindestens so groß wie die Sink- bzw. Auftriebsgeschwindigkeit der Teilchen des gebildeten unlöslichen Reaktionsproduktes ist, wobei diese ihrerseits von verschiedenen Faktoren, wie beispielsweise der Viskosität des Reaktionsmediums, abhängt.

Beim erfindungsgemäßen Verfahren wird zunächst eine "Reaktions-Suspension" zubereitet, d.h. ein geeignet gewähltes Suspensionsmedium, der erste Reaktand und der zweite Reaktand werden in Kontakt gebracht und die Reaktanden werden homogen im Suspensionsmedium verteilt. Die Reaktions-Suspension weist typischerweise einen Feststoffgehalt von 10 bis 50 Gew.-% auf. Der Feststoffgehalt ist nach oben lediglich dadurch begrenzt, dass die Suspension noch gut pumpbar sein soll. Andererseits ist das Arbeiten mit stark verdünnten Suspensionen nicht wirtschaftlich.

Für die Zubereitung der Reaktions-Suspension ist die Reihenfolge der Zugabe der Reaktanden zum Suspensionsmedium an sich nicht kritisch. Im Allgemeinen ist es jedoch bevorzugt die Reaktions-Suspension zuzubereiten, indem man eine Suspension des ersten Reaktanden in dem Suspensionsmedium mit dem flüssigen oder gelösten zweiten Reaktanden mischt. So schlämmt man vorzugsweise den teilchenförmigen ersten Reaktanden in dem Suspensionsmedium auf und versetzt die erhaltene Suspension mit dem zweiten Reaktanden, falls dieser flüssig ist, oder einer Lösung des zweiten Reaktanden in dem Suspensionsmedium oder einem damit mischbaren Lösungsmittel.

Die Zugabe des flüssigen oder gelösten zweiten Reaktanden erfolgt zweckmäßigerweise, indem man den zweiten Reaktanden in einer der Reaktionszone vorgelagerten Einmischzone in einen Strom der Suspension des ersten Reaktanden eindosiert. Die Mischzeit in der Einmischzone sollte dabei kurz im Vergleich zur Verweilzeit in der Reaktionszone sein. Die Verweilzeit in der Reaktionszone beträgt vorzugsweise wenigstens das 5-fache, insbesondere wenigstens das 10-fache, besonders bevorzugt wenigstens das 20-fache der Verweilzeit in der Einmischzone. Die Verweilzeit in der Reaktionszone beträgt typischerweise 2 min bis 6 Stunden.

Ein effektives Einmischen des zweiten Reaktanden kann man z.B. durch statische Mischelemente errreichen, die unmittelbar stromabwärts zur Zudosierungsstelle des zweiten Reaktanden angeordnet sind. Eine bevorzugte Art des Einmischens besteht jedoch darin, die Suspension mit einer hohen Strömungsgeschwindigkeit durch die Einmischzone zu führen und die Strömungsgeschwindigkeit dann zu verlangsamen. Dies erreicht man zweckmäßigerweise dadurch, dass der stromabwärts zur Zudosierungsstelle gelegene Teil der Einmischzone gegenüber dem Bereich der Zudosierungsstelle einen sich vergrößernden Querschnitt aufweist. Wegen des im Bereich der hohen Strömungsgeschwindigkeit herrschenden niedrigen statischen Drucks vermischt sich der zudosierte zweite Reaktand innig mit der durchströmenden Suspension. Anschließend wird die Strömungsgeschwindigkeit verlangsamt, um die für das erfindungsgemäße Verfahren kennzeichnenden scherarmen Bedingungen einzustellen.

Es ist auch möglich, den zweiten Reaktanden verteilt an mehreren Stellen zur Suspension des ersten Reaktanden zuzugeben. So kann z.B. eine Teilmenge des zweiten Reaktanden in einer der Reaktionszone vorgelagerten Mischzone zugegeben werden und die Restmenge an einer oder mehreren Stellen in der Reaktionszone verteilt zudosiert werden.

Das erfindungsgemäße Verfahren kann adiabatisch durchgeführt werden, d.h. im Wesentlichen ohne Wärmeaustausch mit der Umgebung. Andererseits ist es möglich, geeignete Wärmetauschelemente zur Heizung und/oder Kühlung vorzusehen, z.B. von einem Heiz- oder Kühlmedium durchströmte Rohrschlangen, die im Mantel eines als Reaktionszone dienenden Strömungsrohrs oder auf dem Mantel in wärmeleitender Verbindung damit angeordnet sind. Von einem Heizoder Kühlmedium durchströmte Einbauten in der Reaktionszone sind ebenfalls möglich, sind jedoch aufgrund der Gefahr sich ausbildender Turbulenzen nicht bevorzugt. Die Reaktionstemperatur variiert stark mit der Art der eingesetzten Reaktanden. Als allgemeiner Rahmen läßt sich eine Temperatur von -80 bis 250 °C angeben.

In vielen Fällen ist es vorteilhaft, die Reaktions-Suspension in mehrere Teilströme aufzuteilen und die Teilströme durch parallel zueinander angeordnete Rohre zu führen. Die parallel angeordneten Rohre können von einem Wärmetauschmedium umgeben sein, so dass sich das erfindungsgemäße Verfahren in einfacher Weise in einem üblichen Rohrbündelwärmetauscher durchführen läßt.

Die Reaktions-Suspension bewegt sich in der Reaktionszone im Wesentlichen in der Strömungsform eines Pfropfens oder eines parabolischen Profils fort. Es ist möglich, die radiale Durchmischung der Reaktions-Suspension durch geeignete Einbauten in der Reaktionszone zu verbessern. Hinsichtlich der Form und Anordnung der Einbauten ist jedoch dafür Sorge zu tragen, dass der scherarme Charakter der Strömung nicht beeinträchtigt wird.

Das gebildete unlösliche Reaktionsprodukt wird zweckmäßigerweise durch Sedimentation oder vorzugsweise durch Filtration abgetrennt. Hierzu wird die Suspension vorzugsweise ohne Passieren eines Förderorgans direkt auf ein Filterorgan gegeben. Zur Filtration eignen sich beispielsweise Bandfilter, Drehfilter, Filterpressen oder Zentrifugen. Bevorzugt sind kontinuierlich arbeitende Filterorgane, insbesondere Bandfilter.

Als erster Reaktand für das erfindungsgemäße Verfahren kommen beispielsweise Salze organischer oder sauerstoffhaltiger anorganischer Säuren oder Alkoholate in Betracht; als zweiter Reaktand kommen anorganische oder organische Säurehalogenide und Alkylhalogenide in Betracht.

Geeignete Salze organischer oder sauerstoffhaltiger anorganischer Säuren sind die Alkali-, Erdalkali- oder Ammoniumsalze aliphatischer, aromatischer oder heteroaromatischer Carbonsäuren oder Sulfonsäuren. Hierzu zählen C₁-C₁₈-Alkancarbonsäuren, wie Ameisensäure, Essigsäure oder Propionsäure, sowie ein- oder zweikernige aromatische Carbonsäuren mit gegebenenfalls ein oder zwei unter Stickstoff, Sauerstoff oder Schwefel ausgewählten Ringheteroatomen, die ein bis vier unabhängig unter C₁-C₄-Alkyl, C₁-C₄-Alkoxy, Nitro oder Halogen ausgewählte Substituenten tragen können, wie Benzoesäure, Naphthoesäure oder Pyridincarbonsäure.

Geeignete Alkoholate sind die Alkali- oder Erdalkalisalze von Alkoholen oder Phenolen. Hierzu zählen geradkettige oder verzweigte C₁-C₁₈-Alkanole, wie Methanol oder Ethanol sowie ein- oder zweikernige aromatische Hydroxyverbindungen, die wie vorstehend substituiert sein können.

Unter den Alkalimetallsalzen sind im Allgemeinen die Natrium- und Kaliumsalze bevorzugt. Besonders bevorzugt sind auch die Ammoniumsalze, die sich von Ammoniak und Aminen ableiten können. Dazu zählen beispielsweise Tetra-C₁-C₁₈-Alkylammoniumsalze, wobei die Alkylreste gleiche oder verschiedene Bedeutung aufweisen können.

Geeignete anorganische Säurechloride sind beispielsweise Phosphor(III)chlorid, Phosphor(V)chlorid, Thionylchlorid oder Sulfurylchlorid. Geeignete organische Säurechloride sind aliphatische, aromatische oder heteroaromatische Säurehalogenide, insbesondere die -chloride. Hierzu zählen die Halogenide von C₁-C₁₈-Alkancarbon- und Sulfonsäuren, wie Acetylchlorid, Propionylchlorid oder Methansulfonsäurechlorid, sowie die Halogenide ein- oder zweikerniger aromatischer Carbonsäuren oder Sulfonsäuren, die wie vorstehend substituiert sein können, wie Benzoylchlorid, Benzolsulfonsäurechlorid oder p-Toluolsulfonsäurechlorid.

Geeignete Alkylhalogenide sind sind primäre, sekundäre oder tertiäre Alkylchloride, -bromide oder -iodide. Hierzu zählen geradkettige oder verzweigte C₁-C₁₈-Alkylhalogenide wie Methylchlorid, Ethylchlorid oder tert-Butylchlorid.

Geeignete Suspensionsmedien sind aliphatische und aromatische Kohlenwasserstoffe, wie Hexan, Heptan, Octan, iso-Octan, Cyclohexan, Methylcyclohexan, Benzol, Alkylbenzole mit bis zu drei C₁-C₄-Alkylresten am aromatischen Kern, wie Toluol, o-, m- und p-Xylol und deren Gemische; halogenierte Kohlenwasserstoffe, insbesondere chlorierte Kohlenwasserstoffe, wie Dichlormethan, Trichlormethan, 1,2-Dichlorethan, 1,1,2-Trichlorethan, Chlorbenzol, Perchlorethylen, 1,2-Dichlorpropan; fluorierte Kohlenwasserstoffe, wie Fluorbenzol oder Fluoralkyl-substituierte Benzole; Ether, wie Diethylether, Diisopropylether, Dioxan, Tetrahydrofuran, Dimethoxyethan, Diethylenglycoldimethylether; Ketone, wie Aceton, Cyclohexanon, Methylisobutylketon; oder Estern, wie Ethylacetat; organische Nitroverbindungen, wie Nitromethan oder Nitrobenzol.

Das Suspensionsmedium kommt vorzugsweise in im Wesentlichen wasserfreier Form zum Einsatz, d.h. der Wassergehalt des Suspensionsmediums beträgt vorzugsweise weniger als 0,5 Gew.-%, insbesondere weniger als 0,1 Gew.-%.

Die Erfindung wird durch die beigefügte Figur und die folgenden Beispiele näher veranschaulicht.

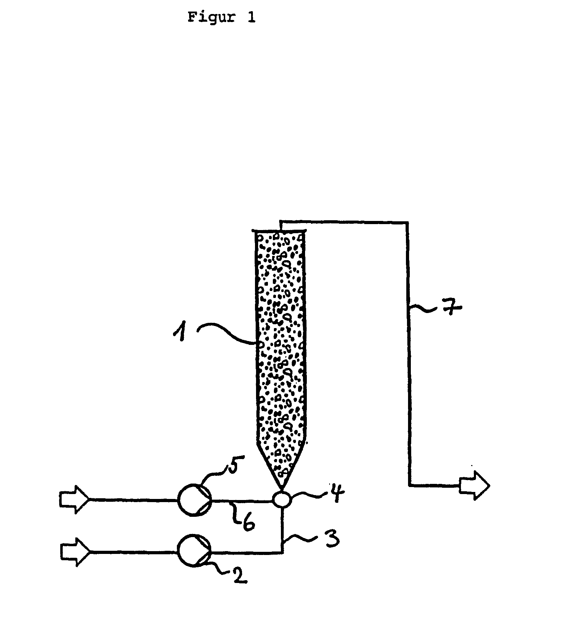

Figur 1 zeigt schematisch eine zur Durchführung des erfindungsgemäßen Verfahrens geeignete Vorrichtung. Zum Verständnis nicht erforderliche, an sich selbstverständliche Details sind weggelassen.

Der Reaktionszone 1 wird über die Pumpe 2 und die Rohrleitung 3 eine Suspension eines festen Reaktanden in einem Suspensionsmedium zugeführt. Über eine Mischdüse 4 wird ein flüssiger oder gelöster zweiter Reaktand eindosiert, der über die Pumpe 5 und die Leitung 6 herangeführt wird. Die die Reaktionszone verlassende Suspension wird über die Leitung 7 abgeführt und einem Filterorgan zugeführt.

### Beispiele:

### Beispiel 1:

Einem senkrecht aufgebauten Strömungsrohr von 150 cm Länge und 3 cm Durchmesser wurde von unten eine Suspension von Ammoniumbenzoat in Dichlorethan (20 Gew.-%) mit einer Dosierrate von 2000 g·h⁻¹ zugeführt. Gleichzeitig wurden vor dem Eingang des Strömungsrohres über ein T-Stück 131,5 g·h⁻¹ Phosphor(III)chlorid der Suspension zudosiert. Die Ammoniumbenzoat-Suspension wurde auf 6 bis 7 °C vorgekühlt, das Phosphor(III)chlorid hatte Raumtemperatur. Im Rohr bildete sich eine Pfropfenströmung aus, die durch eine Reynolds-Zahl von weniger als 2000 charakterisiert war. Die Temperaturen betrugen unten (etwa 5 cm nach der Phosphor(III)-chlorid-Zugabe) 31 °C und im Überlauf 36 °C. Der Überlauf wurde über eine Drucknutsche filtriert. Der Benzoesäuregehalt im Filtrat wurde nach Hydrolyse mit Acetonitril/Wasser zu 17,0 Gew.-% bestimmt, der Chlorid-Gehalt zu weniger als 0,32 Gew.-%. Der Filterwiderstand des Ammoniumchlorids betrug 3,8·10¹² mPa·s·m⁻².

### Beispiel 2:

Dem Strömungsrohr aus Beispiel 1 wurde von unten eine Suspension von Ammoniumbenzoat in Dichlorethan (24,2 g in 100 ml) mit einer Dosierrate von 25,6 ml/min zugeführt. Gleichzeitig wurden vor dem Eingang des Strömungsrohres über ein T-Stück 7,72 ml einer 20 gew.-%igen Lösung von Phosphor(III)chlorid in Dichlorethan der Suspension zudosiert. Im Rohr bildete sich eine Pfropfenströmung aus. Die Temperatur betrug etwa 5 cm nach der Phosphor(III)chlorid-Zugabe 38 °C. Der Überlauf wurde über eine Drucknutsche filtriert. Es wurde etwa 33,3 g/min Filtrat erhalten. Der Benzoesäuregehalt im Filtrat wurde nach Hydrolyse mit Acetonitril/Wasser zu 14,2 Gew.-% bestimmt. Der Filterwiderstand des Ammoniumchlorids betrug 4,9·10¹² mPa·s·m⁻².

### Vergleichsbeispiel 3:

In einem Rührkessel mit doppeltem Impellerrührer wurden 3127 g einer 20% Ammoniumbenzoat-Suspension bei 15 °C vorgelegt und 226,8 g Phosphor(III)chlorid in 45 Minuten zugetropft. Der Rührer lief mit 80 U/min. Der Ansatz wurde noch 40 Minuten bei 15 bis 18 °C nachgerührt. Anschließend wurde über eine Drucknutsche filtriert. Der Filterwiderstand des Ammoniumchlorids betrug 2 bis 2,5·10¹³ mPa·s·m⁻². Im Filtrat wurden nach Hydrolyse mit Wasser/Acetonitril 17,4 Gew.-% Benzoesäure nachgewiesen.

## Patentansprüche

1. Verfahren zur Durchführung einer Fest/Flüssig-Reaktion, bei dem man
a) eine Reaktions-Suspension zubereitet, die einen unter Salzen organischer oder sauerstoffhaltiger anorganischer Säuren oder Alkoholaten ausgewählten ersten Reaktanden suspendiert und einen unter anorganischen oder organischen Säurehalogeniden und Alkylhalogeniden ausgewählten zweiten Reaktanden gelöst in einem Suspensionsmedium enthält, wobei eines der Reaktionsprodukte unlöslich im Suspensionsmedium ist,
b) die Reaktions-Suspension durch eine längliche Reaktionszone leitet, wobei die Reynolds-Zahl der Strömung weniger als 20000 beträgt, und
c) das gebildete unlösliche Reaktionsprodukt abtrennt.

2. Verfahren nach Anspruch 1, bei dem die Reynolds-zahl der Strömung weniger als 10000 beträgt.

3. verfahren nach Anspruch 1 oder 2, bei dem die Längsachse der Reaktionszone vertikal verläuft.

4. verfahren nach einem der vorhergehenden Ansprüche, bei dem man die Reaktions-Suspension zubereitet, indem man eine Suspension des ersten Reaktanden in dem Suspensionsmedium mit dem flüssigen oder gelösten zweiten Reaktanden mischt.

5. Verfahren nach Anspruch 4, bei dem die Verweilzeit der Reaktions-Suspension in der Reaktionszone wenigstens das 10-fache der Mischzeit beträgt.

6. Verfahren nach Anspruch 4 oder 5, bei dem man den zweiten Reaktanden in einen Strom der Suspension des ersten Reaktanden eindosiert.

7. Verfahren nach Anspruch 6, bei dem man die Strömungsgeschwindigkeit der Suspension nach dem Eindosieren des zweiten Reaktanden verlangsamt.

8. verfahren nach einem der vorhergehenden Ansprüche, bei dem man die Reaktions-Suspension in mehrere Teilströme aufteilt und die Teilströme durch parallel zueinander angeordnete Rohre führt.

9. Verfahren nach Anspruch 8, bei dem man als parallel angeordnete Rohre verwendet, die von einem Wärmetauschmedium umgeben sind.

10. Verfahren nach einem der vorhergehenden Ansprüche, bei dem man das unlösliche Reaktionsprodukt durch Filtration abtrennt.

11. Verfahren nach einem der vorhergehenden Ansprüche, bei dem das Suspensionsmedium unter Kohlenwasserstoffen, halogenierten Kohlenwasserstoffen, Ethern, Ketonen oder Estern ausgewählt ist.

12. Verfahren nach Anspruch 11, bei dem das Suspensionsmedium ausgewählt ist unter 1,2-Dichlorethan, 1,2-Dichlorpropan und Mischungen davon.

13. Verfahren nach einem der vorhergehenden Ansprüche, bei dem man als ersten Reaktanden ein Alkalimetallsalz oder das Ammoniumsalz der Benzoesäure und als zweiten Reaktanden Phosphor(III)chlorid verwendet.

## Claims

1. A process for carrying out a solid/liquid reaction which comprises
a) preparing a reaction suspension in which a first reactant selected from among salts of organic and oxygen-containing inorganic acids and alkoxides is present in suspended form and a second reactant selected from among inorganic and organic acid halides and alkyl halides is present in dissolved form in a suspension medium, where one of the reaction products is insoluble in the suspension medium,
b) passing the reaction suspension through an elongated reaction zone so that the Reynolds number of the stream is less than 20 000 and
c) separating off the insoluble reaction product formed.

2. A process as claimed in claim 1, wherein the Reynolds number of the stream is less than 10 000.

3. A process as claimed in claim 1 or 2, wherein the longitudinal axis of the reaction zone is vertical.

4. A process as claimed in any of the preceding claims, wherein the reaction suspension is prepared by mixing a suspension of the first reactant in the suspension medium with the liquid or dissolved second reactant.

5. A process as claimed in claim 4, wherein the residence time of the reaction suspension in the reaction zone is at least 10 times the mixing time.

6. A process as claimed in claim 4 or 5, wherein the second reactant is metered into a stream of the suspension of the first reactant.

7. A process as claimed in claim 6, wherein the flow velocity of the suspension is decreased after the second reactant has been metered into it.

8. A process as claimed in any of the preceding claims, wherein the reaction suspension is divided into a plurality of substreams and the substreams are conveyed through parallel tubes.

9. A process as claimed in claim 8, wherein the parallel tubes used are surrounded by a heat transfer medium.

10. A process as claimed in any of the preceding claims, wherein the insoluble reaction product is separated off by filtration.

11. A process as claimed in any of the preceding claims, wherein the suspension medium is selected from among hydrocarbons, halogenated hydrocarbons, ethers, ketones and esters.

12. A process as claimed in claim 11, wherein the suspension medium is selected from among 1,2-dichloroethane, 1,2-dichloropropane and mixtures thereof.

13. A process as claimed in any of the preceding claims, wherein the first reactant used is an alkali metal salt or the ammonium salt of benzoic acid and the second reactant used is phosphorus(III) chloride.

## Revendications

1. Procédé pour la réalisation d'une réaction solide/liquide, dans laquelle
a) on prépare une suspension de réaction qui contient un premier réactif, choisi parmi les sels d'acides organiques ou inorganiques contenant de l'oxygène ou les alcoolates, sous forme suspendue et un deuxième réactif, choisi parmi les halogénures d'acide inorganiques ou organiques et les halogénures d'alkyle, dissous dans un milieu de mise en suspension, un des produits de réaction étant insoluble dans le milieu de mise en suspension,
b) on conduit la suspension de réaction dans une zone de réaction allongée, le nombre de Reynolds du flux étant inférieur à 20000 et
c) on sépare le produit de réaction insoluble formé.

2. Procédé selon la revendication 1, dans lequel le nombre de Reynolds du flux est inférieur à 10000.

3. Procédé selon la revendication 1 ou 2, dans lequel l'axe longitudinal de la zone de réaction est vertical.

4. Procédé selon l'une quelconque des revendications précédentes, dans lequel on prépare la suspension de réaction en ce qu'on mélange une suspension du premier réactif dans le milieu de mise en suspension avec le deuxième réactif liquide ou dissous.

5. Procédé selon la revendication 4, dans lequel le temps de séjour de la suspension de réaction dans la zone de réaction est d'au moins 10 fois le temps de mélange.

6. Procédé selon la revendication 4 ou 5, dans lequel on dose le deuxième réactif dans un flux de la suspension du premier réactif.

7. Procédé selon la revendication 6, dans lequel on ralentit la vitesse d'écoulement de la suspension après le dosage du deuxième réactif.

8. Procédé selon l'une quelconque des revendications précédentes, dans lequel on divise la suspension de réaction en plusieurs flux partiels et on conduit les flux partiels dans des tuyaux disposés parallèlement les uns par rapport aux autres.

9. Procédé selon la revendication 8, dans lequel on utilise comme tuyaux disposés parallèlement les uns aux autres des tuyaux entourés d'un milieu caloporteur.

10. Procédé selon l'une quelconque des revendications précédentes, dans lequel on sépare le produit de réaction insoluble par filtration.

11. Procédé selon l'une quelconque des revendications précédentes, dans lequel le milieu de suspension est choisi parmi les hydrocarbures, les hydrocarbures halogénés, les éthers, les cétones ou les esters.

12. Procédé selon la revendication 11, dans lequel le milieu de suspension est choisi parmi le 1,2-dichloroéthane, le 1,2-dichloropropane et des mélanges de ceux-ci.

13. Procédé selon l'une quelconque des revendications précédentes, dans lequel on utilise comme premier réactif un sel de métal alcalin ou le sel d'ammonium de l'acide benzoïque et comme deuxième réactif le chlorure de phosphore (III).
